# EUROPÄISCHE PATENTSCHRIFT

(11) **EP 4 260 975 B1**
(45) Veröffentlichungstag und Bekanntmachung des Hinweises auf die Patenterteilung: **15.01.2025**
(21) Anmeldenummer: 23164361.0
(22) Anmeldetag: 27.03.2023
(51) Int. Cl.: B23Q 11/00, B23Q 17/24, B23Q 17/00

(54) **VORRICHTUNG UND VERFAHREN ZUR ERFASSUNG DER POSITION EINES AUFFANGBEHÄLTERS**
DEVICE AND METHOD FOR DETECTING THE POSITION OF A COLLECTING VESSEL
DISPOSITIF ET PROCÉDÉ DE DÉTECTION DE LA POSITION D'UN RÉCIPIENT COLLECTEUR

(30) Priorität: 14.04.2022 DE 202022102029 U
(43) Veröffentlichungstag der Anmeldung: 18.10.2023
(73) Patentinhaber: Starrag GmbH, 09117 Chemnitz (DE)
(72) Erfinder: CONRAD, Peter, 09126 Chemnitz (DE); LUDEWIG, Alexander, 09212 Limbach Oberfrohna (DE)
(74) Vertreter: Rumrich, Gabriele

(56) Entgegenhaltungen:
- JP-A- 2012 115 931
- JP-A- 2021 173 722

## Beschreibung

Die Erfindung betrifft eine Vorrichtung und Verfahren zur Erfassung der Position eines Auffangbehälters und findet an einem Späneförderer einer Werkzeugmaschine Anwendung.

Spanende Werkzeugmaschinen sind für gewöhnlich mit Späneförderern unterschiedlicher Bauart ausgestattet, welche Späne und Kühlschmierstoff trennen und Späne in einen unter dem Abwurf des Späneförderers platzierten Auffangbehälters, insbesondere einem Spänewagen abwerfen. Je nach Menge des Späneanfalls kann der Auffangbehälter in Form eines Containers, einer Spänekiste oder ähnlichem ausgebildet sein.

Um einen reibungslosen Ablauf zu gewähren muss gewährleistet sein, dass immer ein Spänewagen, ein Container oder eine Spänekiste unter dem Abwurf steht. Beim Wechsel zwecks Entleerung kann der Abwurf manuell verschlossen werden. Üblicherweise nimmt man kurzzeitiges Fallen von Spänen und Kühlmittelresten auf den Hallenboden in Kauf, was zu einem zusätzlichen Arbeitsschritt, nämlich der manuellen Beseitigung führt. Kommt es zu Verzögerungen bei der Entleerung, entsteht durch Überlauf unerwünschte Verschmutzung und damit ein erheblicher Mehraufwand bei der Reinigung.

Ist man in der Lage, die Anwesenheit des Spänewagens, Containers oder einer Spänekiste abzufragen und ein elektrisches Signal an die Steuerung der Werkzeugmaschine zu geben, kann der Betreiber der Maschine rechtzeitig gezielt eingreifen, indem ein Bedienerruf ausgelöst wird.

Ein Bedienerruf erfolgt oft als gut sichtbare Meldeleuchte an der Maschine oder in Form einer Nachricht, welche die Steuerung der Maschine an die Produktionsleitung versendet. Das Problem des Standes der Technik ist, dass es viele verschiedene Varianten von Spänewagen, -containern und -kisten gibt, welche Kunden verwenden können.

Die meisten Nutzer einer Werkzeugmaschine verzichten daher auf eine Abfrage des Vorhandenseins eines Spänewagens und akzeptieren die Nachteile. Ein alternativer Lösungsansatz besteht in der Möglichkeit, dass der Nutzer dem Hersteller der Werkzeugmaschine eine Zeichnung des von ihm benutzten Spänewagens/Containers oder der -kiste überlässt. Dies führt jedoch immer zu einer Sonderlösung des Herstellers. Will der Betreiber den Typ des Spänewagens wechseln, muss auch die Abfrage modifiziert werden.

Alternativ wird der Nutzer von den Herstellern angehalten, am Fußboden Leitschienen anzubringen, an denen der Spänewagen fixiert und erkennbar ist.

Aus der Druckschrift US 2006/0201246 A1 ist eine Vorrichtung zur Abfrage des Füllstandes eines Containers bekannt. Die Messung erfolgt radarbasiert, wobei ein Signal in Richtung des in dem Container befindlichen Materials ausgesendet wird und mittels der Signalreflexion in Abhängigkeit der Zeit der Füllstand berechenbar ist. Die beschriebene Lösung ist aufwendig, da je nach Container und dessen Füllstand kein fester Bezugspunkt für die Messung vorhanden ist und somit kein Vorhandensein des Containers ableitbar ist.

Eine Anordnung und Verfahren zur berührungslosen Füllstandsmessung ist aus der Druckschrift DE 42 23 346 C2 bekannt. Die Messung erfolgt mittels impulsförmiger Signale, deren Reflexion zeiterfasst wird. Die Reflexionen entstehen an der Oberfläche, auf der die Signale auftreffen, wobei diese Oberfläche den Füllstand definiert.

Die Druckschrift EP 3 456 600 B1 beschreibt ein Fördersystem einer Bearbeitungseinheit. Das Fördersystem weist Auffangbehälter auf, die mittels einer Positioniereinheit unter einem Auswurf einer Bearbeitungseinheit positionierbar sind. Mittels eines Sensors kann der aktuelle Beladungszustand ermittelt werden. Der Sensor ist bevorzugt ein Drucksensor. Der Aufbau ist sehr aufwändig und nur für einen speziellen Typ von Auffangbehälter nutzbar.

Aus der Druckschrift JP 2021 173722 A ist ein Verfahren zur Messung des Füllstandes eines Containers bekannt. Das Verfahren betrifft die Messung auf einem Gleis, wobei mittels eines seitlich angeordneten Abstandssensors das Vorhandensein des Containers durch Erfassung des Containers geprüft wird. Nachfolgend wird über einen weiteren Sensor, welcher oberhalb des Containers angeordnet ist, der Füllstand des Containers errechnet.

Die Druckschrift JP 2012 115931 A offenbart eine Vorrichtung für den Abwurf von Spänen. Die Vorrichtung umfasst einen Auffangbehälter, der Schneidspäne aus nichtmagnetischem Material an einer vorgeschriebenen Aufnahmeposition aufnimmt, transportiert und entlädt. Des Weiteren ist ein Dauermagnet an dem Auffangbehälter angeordnet, der von einem Näherungsschalter bei Annäherung des Auffangbehälters erfasst wird. Eine derartige Ausgestaltung ist nur mit speziell ausgebildeten Auffangbehältern nutzbar.

Aufgabe der Erfindung ist es, eine Vorrichtung und Verfahren zur Erfassung der Position eines Auffangbehälters zu entwickeln, welche einen einfachen konstruktiven Aufbau aufweist und eine Erkennung der Anwesenheit eines Auffangbehälters in Form eines Spänewagens/Containers oder einer Spänekiste an einem Späneförderer zu schaffen, die unabhängig von der Beschaffenheit des Auffangbehälters diesen erkennt.

Diese Aufgabe wird mit den kennzeichnenden Merkmalen des ersten und siebten Patentanspruchs gelöst.

Vorteilhafte Ausgestaltungen ergeben sich aus den Unteransprüchen.

Die Vorrichtung zur Erfassung der Position eines Auffangbehälters an einem Späneförderer einer Werkzeugmaschine findet bevorzugt im Bereich des Späneförderers Anwendung, wobei der Späneförderer auf einem Boden angeordnet ist und einen Abwurf aufweist, der in Richtung eines darunter positionierbaren Auffangbehälters weist. Der Auffangbehälter kann ein Spänewagen, ein Container oder eine Spänekiste sein. Der Boden ist insbesondere der Hallenboden eines Gebäudes in der die Werkzeugmaschine steht. Im Bereich des Abwurfs, unter dem der Auffangbehälter positionierbar ist, ist wenigstens ein, in Richtung des Bodens weisender Abstandssensor angeordnet, wobei mittels des Abstandssensors der Abstand des Sensors zum Boden/Hallenboden erfassbar ist. Mittels des Abstandssensors ist ein Signal für das Erkennen des Hallenbodens innerhalb eines parametrierten Entfernungsfensters abgebbar. Erkennt der Sensor den Hallenboden, ist kein Auffangbehälter in korrekter Position unter dem Abwurf des Förderbandes vorhanden.

Mit dem Abstandssensor ist das Vorhandensein eines Auffangbehälters feststellbar, wenn der Sensor den Hallenboden nicht erkennt.

Der Auffangbehälter weist einen Behälterboden auf wobei vorteilhafte Weise das Entfernungsfenster unter dem Behälterboden des Auffangbehälters beginnt und unter der Oberkante des Bodens/Hallenbodens endet.

In einer vorteilhaften Ausgestaltung ist der Abstandssensor an einer ersten senkrecht stehenden Stirnseite des Abwurfs angeordnet. Bevorzugt ist der Abstandssensor senkrecht in Richtung des Bodens ausgerichtet.

In einer weiteren vorteilhaften Ausgestaltung ist an einer, der ersten Stirnseite gegenüberliegenden zweiten Stirnseite ein zweiter Abstandssensor angeordnet. Das ist von Vorteil, wenn der Spänewagen, der Container oder die Spänekiste im Verhältnis zur Abwurfgeometrie des Späneförderers nur wenig größer ist. Die zwei Abstandssensoren sind jeweils an beiden Seiten angeordnet, wobei deren Signale miteinander verknüpft werden. Meldet ein Abstandssensor von beiden das Erfassen des Hallenbodens, ist der Auffangbehälter zwar vorhanden, aber nicht in korrekter Position unter dem Abwurf ausgerichtet.

Die Messwerte beziehungsweise Signale der Abstandssensoren werden bevorzugt mittels einer Steuerungseinrichtung verglichen.

Bevorzugt ist der Abstandssensor in Form eines optischen Wegsensors ausgebildet, wobei der Abstand über Laser messbar ist.

Das erfindungsgemäße Verfahren betrifft die Erfassung eines Auffangbehälters an einem Späneförderer einer Werkzeugmaschine, wobei der Späneförderer auf einem Boden angeordnet ist und einen Abwurf aufweist, der in Richtung eines darunter auf dem Boden positionierbaren Auffangbehälters weist. Mittels eines im Bereich des Abwurfs angeordneten Abstandssensors wird der Abstand des Sensors zum Boden erfasst, wobei mittels des Abstandssensors ein Signal für das Vorhandensein des Bodens innerhalb eines parametrierten Entfernungsfensters abgegeben wird derart, dass das Vorhandensein des Bodens als Fehlen des Auffangbehälters definiert ist. So kann unabhängig des Typs von Spänewagen eine zuverlässige Aussage über das Vorhandensein des Spänewagens erfolgen.

In einer vorteilhaften Ausgestaltung ist ein zweiter Abstandssensor vorhanden, wobei mittels einer Steuerungseinrichtung Messwerte des ersten und zweiten Abstandssensor abgeglichen werden.

Die Erfindung wird nachfolgend an einem Ausführungsbeispiel und zugehörigen Zeichnungen näher erläutert.

Es zeigen:
- Figur 1: eine Darstellung eines Spänewagens an einem Späneförderer,
- Figur 2: eine Vorderansicht des Spänewagens an dem Späneförderer gemäß Figur 1.

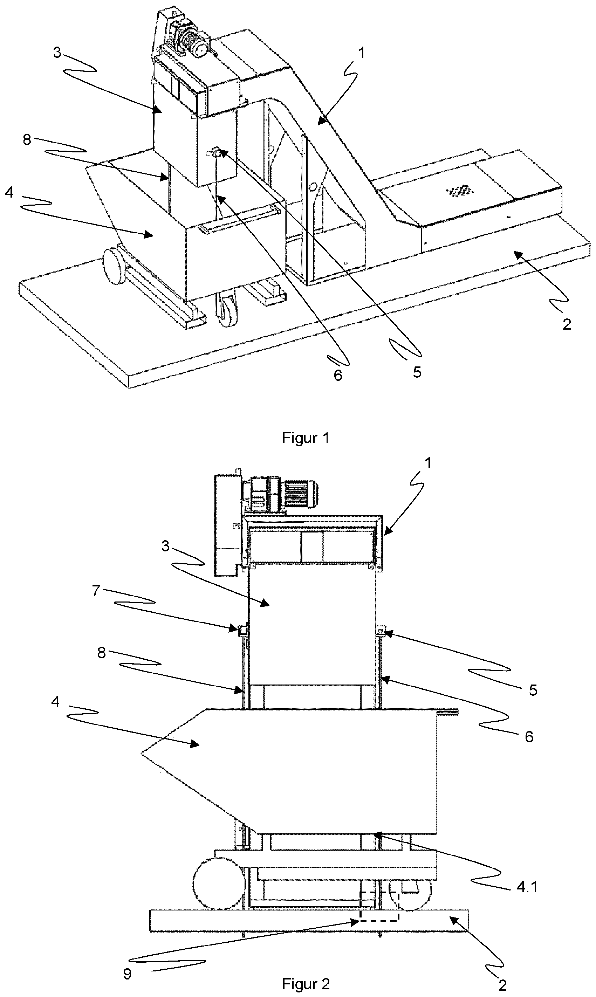

Figur 1 zeigt einen Späneförderer 1 einer Werkzeugmaschine auf einem Boden 2, insbesondere einem Hallenboden. Figur 2 zeigt eine Darstellung des Aufbaus gemäß Figur 1 in einer Vorderansicht. Der Späneförderer 1 weist einen Abwurf 3 auf, der in Richtung des Bodens 2 weist. Unter dem Abwurf 3 ist auf dem Boden 2 ein Auffangbehälter 4 mit einem Behälterboden 4.1 angeordnet. Der Auffangbehälter 4 ist in Form eines Spänewagens ausgebildet, kann jedoch auch als Container oder Spänekiste ausgestaltet sein.

An einer ersten senkrecht stehenden Stirnseite des Abwurfs 3 ist ein erster Abstandssensor 5 angeordnet, der einen ersten Laserstrahl 6 in Richtung des Bodens aussendet. An einer, der ersten Stirnseite gegenüberliegenden zweiten Stirnseite des Abwurfs ist ein zweiter Abstandssensor 7 mit einem zweiten Laserstrahl 8 angeordnet.

Die Abstandssensoren 5, 7 weisen senkrecht in Richtung des Bodens 2, wobei deren Signale miteinander verknüpft sind. Die Abstandssensoren 5, 7 werden einmalig auf den Abstand zum Hallenboden 2 parametriert, wobei ein Entfernungsfenster 9 vorgegeben wird.

Entspricht der Abstand zum Hallenboden 2 nicht dem parametrierten Entfernungsfenster 9 ist ein Auffangbehälter 4 vorhanden und eine entsprechende Meldung wird ausgelöst. Das Entfernungsfenster 9 beginnt unter dem Behälterboden 4.1 des Auffangbehälters 4 und endet unter der Oberkante des Bodens/Hallenbodens 2.

Meldet einer der Abstandssensoren 5 oder 7 das Erfassen des Bodens 2, der andere jedoch nicht, ist der Auffangbehälter 4 zwar vorhanden, aber nicht in korrekter Position zum Abwurf 3 ausgerichtet.

Das vom Abstandsensor 5 und 7 definierte Entfernungsfenster 9 beginnt unterhalb des Behälterbodens 4.1 des Auffangbehälters 4 und endet unterhalb des Hallenbodens. Damit wird der Hallenboden sicher erkannt, was im Umkehrschluss bedeutet, dass sich kein Auffangbehälter 4 unter dem Abwurf 3 befindet.

Die Vorrichtung ist entgegen dem Stand der Technik universell anwendbar und muss nur einmal auf den Abstand des Abstandssensors zum Boden parametriert werden. Im Allgemeinen ist der Boden 2 auch der Hallenboden der Werkhalle.

### Bezugszeichenliste

- 1: Späneförderer
- 2: Boden
- 3: Abwurf
- 4: Auffangbehälter
- 4.1: Behälterboden
- 5: Erster Abstandssensor
- 6: Erster Laserstrahl
- 7: Zweiter Abstandssensor
- 8: Zweiter Laserstrahl
- 9: Entfernungsfenster

## Patentansprüche

1. Vorrichtung zur Erfassung der Position eines Auffangbehälters an einem Späneförderer (1) einer Werkzeugmaschine, aufweisend einen, auf einem Boden (2) anordnebaren Späneförderer (1) mit einem Abwurf (3), der in Richtung eines darunter auf dem Boden positionierbaren Auffangbehälters (4) weist, wobei im Bereich des Abwurfs über einem darunter positionierbaren Auffangbehälter (4) wenigstens ein, in Richtung des Bodens (2) weisender Abstandssensor (5) angeordnet ist, wobei mittels des Abstandssensors (5) der Abstand des Sensors (5) zum Boden (2) erfassbar ist und wobei der Abstandssensor (5) ein parametrierbares Entfernungsfenster (9) aufweist, innerhalb dessen ein Signal für das Vorhandensein des Bodens (2) abgebbar ist, wobei das Entfernungsfenster (9) unterhalb eines positionierbaren Behälterbodens (4.1) des Auffangbehälters (4) beginnt und unterhalb des Bodens (2) endet derart, dass die Erfassung des Bodens (2) als Fehlen des Auffangbehälters (4) definierbar ist.

2. Vorrichtung nach Anspruch 1, wobei der Abstandssensor (5) an einer ersten senkrecht stehenden Stirnseite des Abwurfs (3) angeordnet ist.

3. Vorrichtung nach einem der Anspruch 1 oder 2, wobei der Abstandssensor (5) senkrecht in Richtung des Bodens (2) weist.

4. Vorrichtung nach den Ansprüchen 2 und 3 wobei an einer, der ersten Stirnseite gegenüberliegenden zweiten Stirnseite ein zweiter Abstandssensor (7) angeordnet ist.

5. Vorrichtung nach Anspruch 4, wobei mittels einer Steuerungseinrichtung Messwerte des ersten und zweiten Abstandssensor (7) vergleichbar sind.

6. Vorrichtung nach einem der Ansprüche 1 bis 5, wobei der erste und/oder zweite Abstandssensor (5, 7) ein optischer Wegsensor ist.

7. Verfahren zur Erfassung der Position eines Auffangbehälters an einem Späneförderer (1) einer Werkzeugmaschine wobei der Späneförderer (1) auf einem Boden (2) angeordnet ist und einen Abwurf (3) aufweist, der in Richtung eines darunter auf dem Boden (2) positionierbaren Auffangbehälters (4) weist, wobei mittels eines im Bereich des Abwurfs (3) angeordneten Abstandssensors (5) der Abstand des Sensors (5) zum Boden (2) erfasst wird, wobei mittels des Abstandssensors (5) ein Signal für das Vorhandensein des Bodens (2) innerhalb eines parametrierten Entfernungsfensters (9) abgegeben wird derart, dass das Vorhandensein des Bodens (2) als Fehlen des Auffangbehälters (4) definiert ist.

8. Verfahren nach Anspruch 7, wobei ein zweiter Abstandssensor (7) vorhanden ist, wobei mittels einer Steuerungseinrichtung Messwerte des ersten und zweiten Abstandssensor (5, 7) abgeglichen werden.

## Claims

1. Device for detecting the position of a collecting container on a chip conveyor (1) of a machine tool, having a chip conveyor (1) which can be arranged on a base (2) and has a discharge (3) which points in the direction of a collecting container (4) which can be positioned below it on the base, wherein at least one distance sensor (5) which points in the direction of the base (2) is arranged in the region of the discharge above a collecting container (4) which can be positioned below it, wherein the distance of the sensor (5) to the base (2) can be detected by means of the distance sensor (5), and wherein the distance sensor (5) has a parameterizable distance window (9), within which a signal for the presence of the base (2) can be emitted, wherein the distance window (9) is located below a positionable container base (4.1) of the collecting container (4) and ends below the base (2) in such a way that the detection of the base (2) can be defined as the absence of the collecting container (4).

2. Device according to claim 1, wherein the distance sensor (5) is arranged on a first vertically disposed end face of the discharge (3).

3. Device according to one of claims 1 or 2, wherein the distance sensor (5) points vertically in the direction of the base (2).

4. Device according to claims 2 and 3, wherein a second distance sensor (7) is arranged on a second end face opposite the first end face.

5. Device according to claim 4, wherein measured values of the first and second distance sensors (7) are comparable by means of a control device.

6. Device according to one of claims 1 to 5, wherein the first and/or second distance sensor (5, 7) is an optical displacement sensor.

7. Method for detecting the position of a collecting container on a chip conveyor (1) of a machine tool, wherein the chip conveyor (1) is arranged on a base (2) and has a discharge (3) which points in the direction of a collecting container (4) which can be positioned underneath on the base (2), wherein the distance of the sensor (5) to the base (2) is detected by means of a distance sensor (5) arranged in the region of the discharge (3), wherein a signal for the presence of the base (2) within a parameterized distance window (9) is emitted by means of the distance sensor (5) in such a way that the presence of the base (2) is defined as the absence of the collecting container (4).

8. Method according to claim 7, wherein a second distance sensor (7) is provided, wherein measured values of the first and second distance sensors (5, 7) are reconciled by means of a control device.

## Revendications

1. Dispositif pour détecter la position d'un bac collecteur sur un convoyeur de copeaux (1) d'une machine-outil, comportant un convoyeur de copeaux (1) pouvant être disposé sur un sol (2) et muni d'une sortie d'éjection (3) qui est orientée en direction d'un bac collecteur (4) pouvant être positionné en dessous sur le sol, dans lequel au moins un capteur d'écartement (5) orienté en direction du sol (2) est disposé dans la zone de la sortie d'éjection au-dessus d'un bac collecteur (4) qui peut être positionné en dessous, dans lequel l'écart entre le capteur (5) et le sol (2) peut être détecté au moyen du capteur d'écartement (5) et le capteur d'écartement (5) comporte une fenêtre de distance (9) paramétrable à l'intérieur de laquelle un signal peut être émis pour la présence du sol (2), la fenêtre de distance (9) commençant en dessous d'un fond de bac (4.1) positionnable du bac collecteur (4) et finissant en dessous du sol (2), de telle manière que la détection du sol (2) peut être définie comme l'absence du bac collecteur (4).

2. Dispositif selon la revendication 1, dans lequel le capteur d'écartement (5) est disposé sur une première face frontale verticale de la sortie d'éjection (3).

3. Dispositif selon l'une des revendications 1 ou 2, dans lequel le capteur d'écartement (5) est orienté verticalement en direction du sol (2).

4. Dispositif selon les revendications 2 et 3, dans lequel un deuxième capteur d'écartement (7) est disposé sur une deuxième face frontale opposée à la première face frontale.

5. Dispositif selon la revendication 4, dans lequel des valeurs de mesure des premier et deuxième capteurs d'écartement (7) peuvent être comparées au moyen d'une installation de commande.

6. Dispositif selon l'une des revendications 1 à 5, dans lequel le premier capteur d'écartement et/ou le deuxième (5, 7) sont un capteur de déplacement optique.

7. Procédé pour détecter la position d'un bac collecteur sur un convoyeur de copeaux (1) d'une machine-outil, dans lequel le convoyeur de copeaux (1) est disposé sur un sol (2) et comporte une sortie d'éjection (3) qui est orientée en direction d'un bac collecteur (4) pouvant être positionné en dessous sur le sol (2), dans lequel l'écart entre le capteur (5) et le sol (2) est détecté au moyen d'un capteur d'écartement (5) disposé dans la zone de la sortie d'éjection, dans lequel un signal de présence du sol (2) dans une fenêtre de distance (9) paramétrable est émis au moyen du capteur d'écartement (5), de telle manière que la détection du sol (2) peut être définie comme l'absence du bac collecteur (4).

8. Procédé selon la revendication 7, dans lequel est prévu un deuxième capteur d'écartement (7), des valeurs de mesure des premier et deuxième capteurs d'écartement (5, 7) pouvant être comparées au moyen d'une unité de commande.
